# EUROPEAN PATENT SPECIFICATION

(11) **EP 4 316 880 B1**
(45) Date of publication and mention of the grant of the patent: **09.09.2026**
(21) Application number: 21934316.7
(22) Date of filing: 13.07.2021
(51) Int. Cl.: B60J 1/10, B60J 1/20, B60R 13/04, B60Q 1/26

(54) **VEHICLE WINDOW ASSEMBLY AND VEHICLE**
FAHRZEUGFENSTERANORDNUNG UND FAHRZEUG
ENSEMBLE FENÊTRE DE VÉHICULE ET VÉHICULE

(30) Priority: 27.03.2021 CN 202110331414; 27.03.2021 CN 202120634219 U
(43) Date of publication of application: 07.02.2024
(73) Proprietor: Fuyao Glass Industry Group Co., Ltd., Fuqing, Fujian 350300 (CN)
(72) Inventor: LIN, Qipeng, Fuzhou, Fujian 350301 (CN); LIN, Qiming, Fuzhou, Fujian 350301 (CN); LIU, Zhixian, Fuzhou, Fujian 350301 (CN); DING, Zhiwen, Fuzhou, Fujian 350301 (CN); XU, Chaowu, Fuzhou, Fujian 350301 (CN); WENG, Yong, Fuzhou, Fujian 350301 (CN)
(74) Representative: Mewburn Ellis LLP
(86) International application number: PCT/CN2021/106032
(87) International publication number: WO 2022/205671

(56) References cited:
- CN-A- 101 624 000
- CN-A- 112 937 260
- CN-U- 207 077 982
- CN-U- 207 697 446
- CN-U- 209 224 911
- CN-U- 211 107 242
- CN-U- 212 047 198
- JP-A- 2014 008 854
- US-A1- 2014 003 076
- US-A1- 2020 023 719
- US-B1- 7 162 840

## Description

### TECHNICAL FIELD

This disclosure relates to the field of vehicle technology, and specifically to vehicular window assemblies and a vehicle.

### BACKGROUND

With an increase in a user's demand for personalized and functionalized vehicle appearance, decorative vehicular window assemblies have emerged. However, the vehicular window assemblies in the related art lack a reasonable structural design.

CN207697446U discloses a quarter window structure including a decorative panel and a molding strip.

US7162840B1 discloses a window assembly comprising an elongated transparent panel, at least one lighting assembly, and at least one opaque covering.

### SUMMARY

A vehicular window assembly and a vehicle is provided in the disclosure. The invention is set out in the appended set of claims.

### BRIEF DESCRIPTION OF THE DRAWINGS

In order for clarity in elaboration of technical solutions of embodiments of the disclosure, the following will give a brief introduction to the accompanying drawings used for describing the
embodiments. Apparently, the accompanying drawings described below are some embodiments of the disclosure. Based on these drawings, those of ordinary skill in the art can also obtain other drawings without creative effort.
FIG. 1 is a schematic view of a vehicular window assembly provided in embodiments of the disclosure.
FIG. 2 is a schematic view of a molding strip provided in embodiments of the disclosure.
FIG. 3 is an exploded view of a decorative module provided in embodiments of the disclosure.
FIG. 4 is an assembly view of the decorative module illustrated in FIG. 3.
FIG. 5 is a schematic view of the decorative module illustrated in FIG. 4, viewed from another direction.
FIG. 6 is a cross-sectional view of a decorative module provided in embodiments of the disclosure.
FIG. 7 is an enlarged view of part A of the decorative module illustrated in FIG. 6.
FIG. 8 is a schematic view of a light-emitting assembly provided in embodiments of the disclosure.
FIG. 9 is a cross-sectional view of a decorative module provided in an embodiment of the disclosure.
FIG. 10 is a cross-sectional view of a decorative module provided in another embodiment of the disclosure.
FIG. 11 is a cross-sectional view of a decorative module provided in yet another embodiment of the disclosure.
FIG. 12 is a cross-sectional view of a decorative module provided in yet another embodiment of the disclosure.
FIG. 13 is a cross-sectional view of a decorative module provided in yet another embodiment of the disclosure.
FIG. 14 is a cross-sectional view of a decorative module provided in yet another embodiment of the disclosure.
FIG. 15 is a schematic view of a vehicle provided in embodiments of the disclosure.
FIG. 16 is a schematic view illustrating electrical connections of a vehicle provided in embodiments of the disclosure.
FIG. 17 is a schematic view illustrating a first cover plate and a connector that are integrally formed provided in embodiments of the disclosure.
FIG. 18 is a schematic view of a vehicle provided in embodiments of the disclosure.
FIG. 19 is a schematic view of a vehicular window assembly provided in embodiments of the disclosure.
FIG. 20 is a schematic view of a decorative module provided in embodiments of the disclosure.
FIG. 21 is a schematic view of a decorative module provided in embodiments of the disclosure, viewed from another direction.
FIG. 22 is a schematic cross-sectional view of a decorative module provided in embodiments of the disclosure.
FIG. 23 is a schematic partial view of a decorative module provided in embodiments of the disclosure.
FIG. 24 is a schematic view illustrating a mounting position of each light-emitting assembly at a first cover plate provided in embodiments of the disclosure.
FIG. 25 is a cross-sectional view of the structure illustrated in FIG. 24, taken along line A-A.
FIG. 26 is a schematic view of a molding strip provided in embodiments of the disclosure.
FIG. 27 is a schematic view illustrating fitting of a molding strip and a decorative strip provided in embodiments of the disclosure.
FIG. 28 is a cross-sectional view of the structure illustrated in FIG. 27, taken along line B-B.

### DETAILED DESCRIPTION

The following will describe technical solutions of embodiments of the disclosure clearly and completely with reference to the accompanying drawings in embodiments of the disclosure. Apparently, embodiments described herein are merely some of rather than all embodiments of the disclosure. Based on the embodiments of the disclosure, all other embodiments obtained by those of ordinary skill in the art without creative effort shall fall within the protection scope of the disclosure.

The terms "first", "second", and the like used in the specification, the claims, and the accompany drawings of the disclosure are used to distinguish different objects rather than describe a particular order. In addition, the terms "include", "comprise", and "have" as well as variations thereof are intended to cover non-exclusive inclusion. For example, a procedure, a method, a system, a product, or a device that includes a series of operations or units is not limited to the operations or units listed, but optionally may further include the operations or units that are not listed or optionally may further include other operations or units that are inherent to such a procedure, a method, a system, a product, or a device.

The "embodiment" or "implementation" referred to herein means that a particular feature, structure, or characteristic described in connection with the embodiment or implementation may be included in at least one embodiment of the disclosure. The phrase appearing in various places in the specification does necessarily refer to the same embodiment, nor does it refer to independent or alternative embodiments that are mutually exclusive to other embodiments. It is explicitly and implicitly understood by those skilled in the art that the embodiments described herein may be combined with other embodiments in the case where there is no contradiction in at least two embodiments combined.

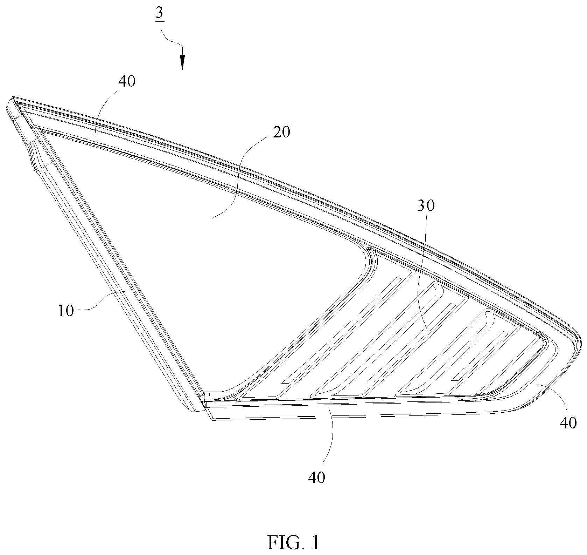

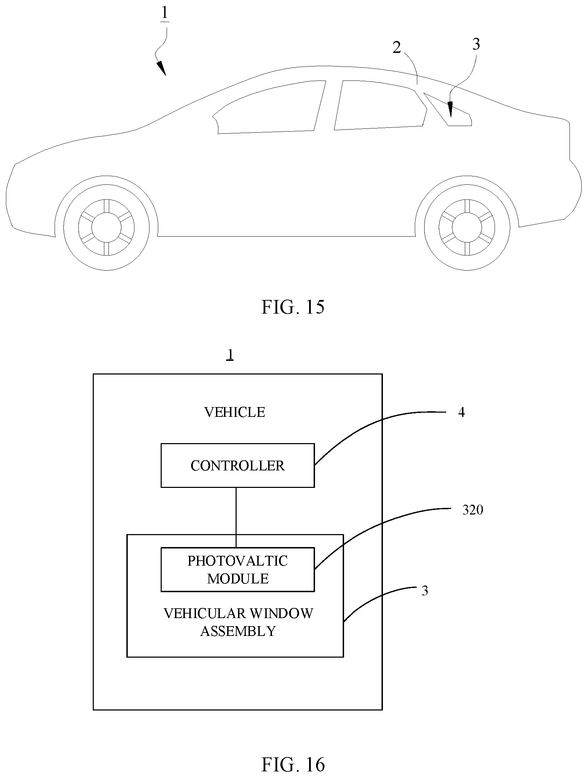

Referring to FIG. 1, a vehicular window assembly 3 is provided in the disclosure. The vehicular window assembly 3 may be applied to, but is not limited to, a vehicle 1, as illustrated in FIG. 15. The vehicular window assembly 3 may be, but is not limited to, a corner window (also referred to as a quarter window). In the disclosure, the quarter window is merely taken as an example for illustration. The vehicular window assembly 3 includes a light-transmitting member 20, a decorative module 30, and a molding strip 10. The following will describe in detail specific structures, relative position relationships, etc., of the light-transmitting member 20, the decorative module 30, and the molding strip 10 with reference to the accompanying drawings.

The light-transmitting member 20 is configured to allow light to pass through, i.e., external light can pass through the light-transmitting member 20 into the vehicle 1, so as to guarantee adequate light in the vehicle 1. The light-transmitting member 20 may be, but is not limited to, a glass panel (e.g., a clean glass panel, a grey glass panel, a green glass panel, a polycarbonate (PC) glass panel, etc. that can serve as an automotive glass panel). In other embodiments, the light-transmitting member 20 may also be made of other materials that can allow light to pass through other than glass. The disclosure is not limited in this regard. Optionally, a thickness of the light-transmitting member 20 is 3 mm. It is to be noted that, the light-transmitting member 20 may have a single-layer structure (e.g., may be a single-layer glass panel) or may have a multi-layer structure (e.g., may be a laminated glass panel).

The decorative module 30 is configured to play a decorative role, so as to enhance aesthetics of the vehicle 1. For the structure of the decorative module 30, detailed introduction will be given in the following embodiments.

The molding strip 10 is configured to coat a periphery of the light-transmitting member 20 and a periphery of the decorative module 30 to protect the light-transmitting member 20 and the decorative module 30, and is configured to connect the light-transmitting member 20 and the decorative module 30 into an integral body, so that it is easy to mount the light-transmitting member 20 and the decorative module 30 to a vehicle frame 2. The molding strip 10 may be made of, but is not limited to, thermoplastic elastomer (TPE), polyurethane (PU), polyvinyl chloride (PVC), and the like.

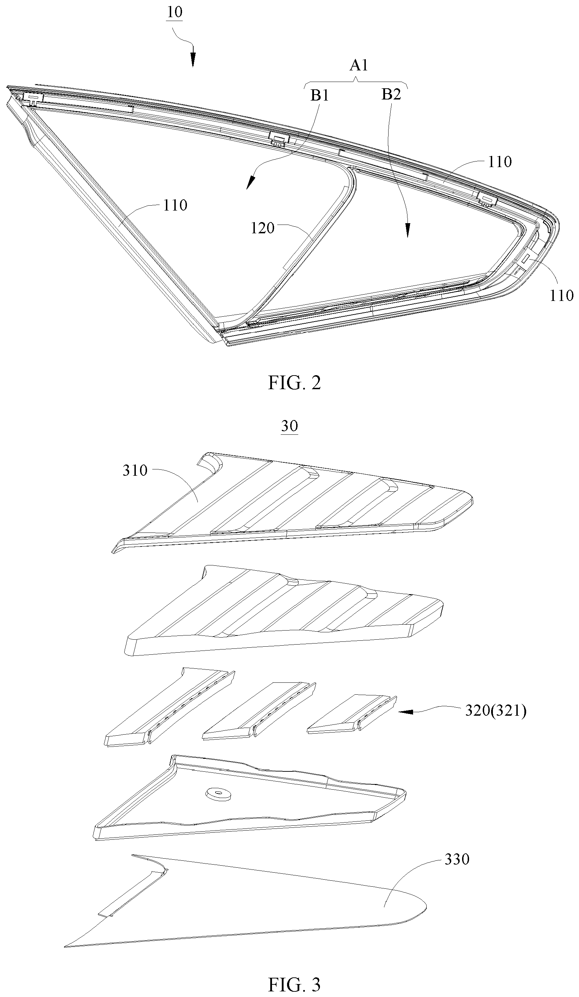

Referring to FIG. 2, the molding strip 10 includes a first molding strip 110 and a second molding strip 120. The first molding strip 110 surrounds a space to define a closed loop, and the closed loop constitutes an accommodating region A1. The second molding strip 120 is connected to two opposite sides of the first molding strip 110 to separate the accommodating region A1 into a first region B1 and a second region B2, where the first region B1 and the second region B2 are spaced apart from each another. The light-transmitting member 20 is disposed in the first region B1, and the decorative module 30 is disposed in the second region B2.

In the related art, the decorative module 30 in the vehicular window assembly 3 is disposed in the second region B2, and the light-transmitting member 20 is disposed in both the first region B1 and the second region B2. That is, in the second region B2, the light-transmitting member 20 and the decorative module 30 are stacked together, in other words, an orthographic projection of the light-transmitting member 20 in the second region B2 overlaps an orthographic projection of the decorative module 30 in the second region B2. It is to be understood that, according to the arrangement in the related art, a thickness of an entity in the second region B2 is a sum of a thickness of the light-transmitting member 20 and a thickness of the decorative module 30.

In the disclosure, only the decorative module 30 is disposed in the second region B2. Therefore, a thickness of an entity in the second region B2 is a thickness of the decorative module 30. Compared with the arrangement in the related art, the vehicular window assembly 3 provided in the disclosure is thinner, thereby avoiding an increase in a width of the vehicle 1.

Optionally, an area of an orthographic projection of the light-transmitting member 20 in the first region is a first area. An area of an orthographic projection of the decorative module 30 in the second region is a second area. A sum of the first area and the second area is a third area. The first area is 25%~75% of the third area. It is to be understood that, in the case where the vehicular window assembly 3 is applied to the vehicle 1 and a size of the light-transmitting member 20 is relatively small, an amount of light that can pass through the light-transmitting member 20 is relatively small. As a result, the rear of the vehicle 1 is relatively dark, and the field of view available to a passenger(s) in the rear seat(s) is relatively narrow, so that the passenger(s) in the rear seat(s) may feel depressed. In addition, when the decorative module 30 is too small, the decorative module 30 cannot decorate the vehicle 1. Therefore, as described above, the first area is set to be 25%~75% of the third area, and thus not only the requirements of the passenger(s) in the rear seat(s) for light and field of view can be satisfied, but also the decorative module 30 can possess an ample size suitable for decoration.

Referring to FIG. 1, the vehicular window assembly 3 further includes a decorative strip 40. The decorative strip 40 is disposed on the first molding strip 110 and surrounds the accommodating region A1, in other words, the decorative strip 40 is disposed on the first molding strip 110 along a contour of the first molding strip 110. As illustrated in FIG. 1, in the disclosure, a part of the decorative strip 40 is disposed at a part of a periphery of the light-transmitting member 20, and the remaining part of the decorative strip 40 is disposed at a part of a periphery of the decorative module 30. It is to be understood that, the decorative strip 40 is disposed around a periphery of the vehicular window assembly 3, thereby accentuating the design of the vehicular window assembly 3 and achieving a favorable decorative effect. The decorative strip 40 may be made of, but is not limited to, aluminium alloy, stainless steel, and the like. A metal material has reflective properties, enhancing the decorative effect.

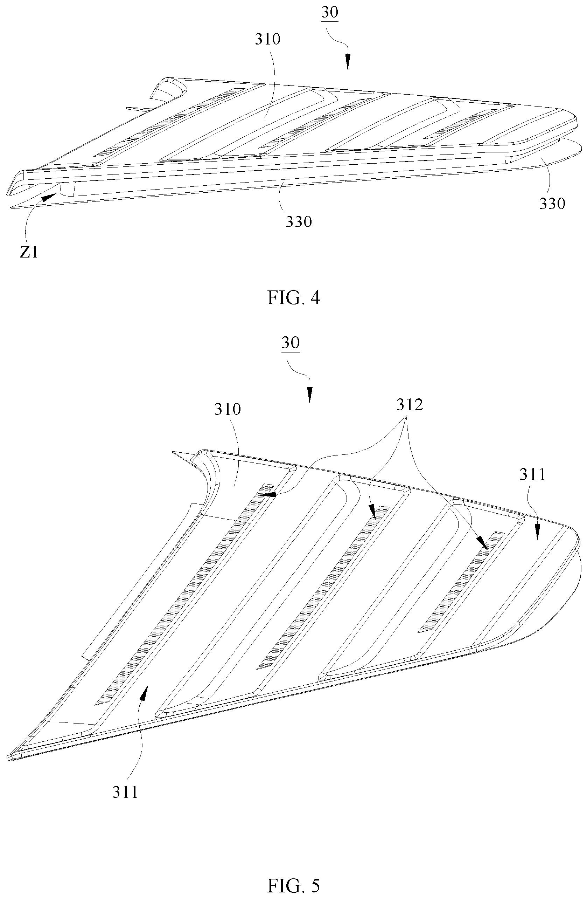

Referring to FIG. 3 and FIG. 4, the decorative module 30 includes a decorative panel 310, a photoelectric module 320, and a support plate 330. The decorative panel 310 may be made of, but is not limited to, plastic, and the decorative panel 310 may be, but is not limited to, white, yellow, grey, etc. The decorative panel 310 and the support plate 330 are disposed opposite to each other to cooperatively define a first accommodating space Z1. When the vehicular window assembly 3 is applied to the vehicle 1, the decorative panel 310 is exposed to the outside of the vehicle 1, i.e., a passenger(s) can directly see or touch the decorative panel 310 at the outside of the vehicle 1.

The photoelectric module 320 includes a light-emitting assembly 321 configured to emit light. The light-emitting assembly 321 is accommodated in the first accommodating space Z1, i.e., the light-emitting assembly 321 is located between the decorative panel 310 and the support plate 330. Both the decorative panel 310 and the support plate 330 can protect the light-emitting assembly 321. Further, at least a part of the decorative panel 310 is a light-transmitting region, and the light-transmitting region of the decorative panel 310 is configured to allow the light emitted by the light-emitting assembly 321 to pass through.

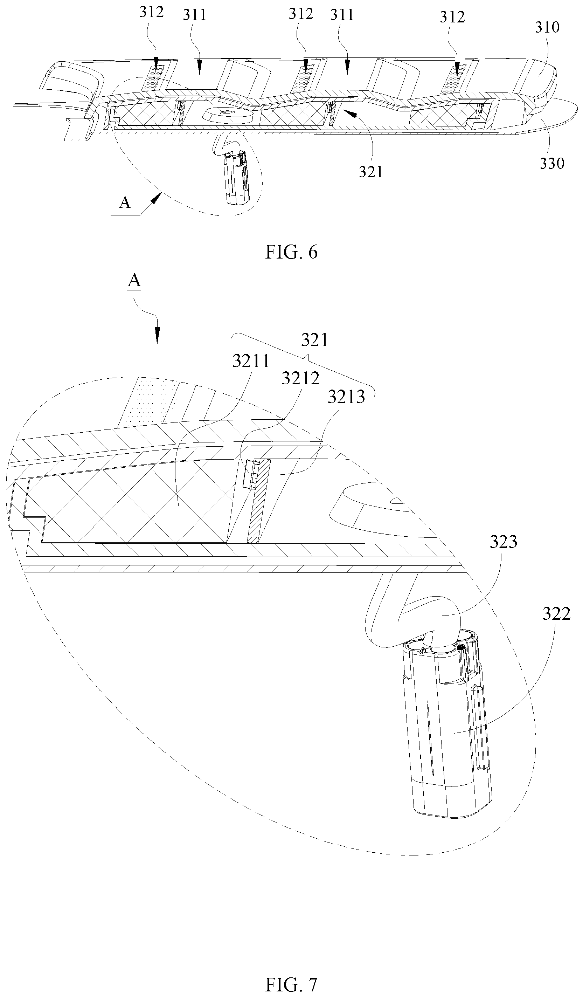

Referring to FIG. 5 and FIG. 6, the decorative panel 310 includes a light-shielding portion 311 and multiple light-transmitting portions 312, where the "multiple" refers to that the number (quantity) is greater than or equal to two, which may be, but is not limited to, two, three, five, six, eight, etc. Light transmittance of the light-shielding portion 311 is lower than light transmittance of the light-transmitting portion 312. It is to be noted that, the light transmittance of the light-transmitting portion 312 is greater than zero, which means that the light-transmitting portion 312 can allow the light emitted by the light-emitting assembly 321 to pass through. The light transmittance of the light-shielding portion 311 may be equal to or greater than zero, which means that the light-shielding portion 311 cannot allow the light emitted by the light-emitting assembly 321 to pass through, or that the light-shielding portion 311 can only allow a small amount of the light emitted by the light-emitting assembly 321 to pass through and the light-shielding portion 311 can allow less light to pass through than the light-transmitting portion 312 can.

Further, the multiple light-transmitting portions 312 are spaced apart from each another. The light-shielding portion 311 encircles a periphery of each of the light-transmitting portions 312. In other words, the multiple light-transmitting portions 312 are dispersedly disposed at intervals on the decorative panel 310, and the remaining part of the decorative panel 310 is the light-shielding portion 311. When the light-emitting assembly 321 emits light, multiple light strips that are spaced apart from each another are formed on the decorative panel 310, enhancing the technological appeal of the vehicular window assembly 3.

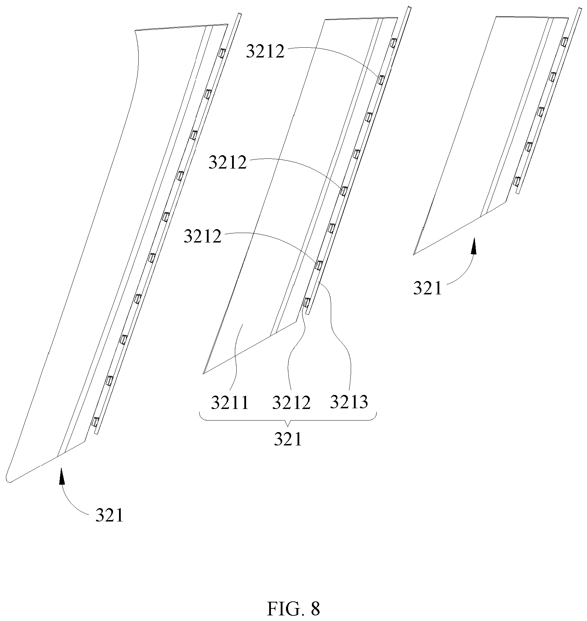

Referring to FIG. 7 and FIG. 8, the light-emitting assembly 321 is implemented as at least one light-emitting assembly, including but not limited to, one light-emitting assembly, two light-emitting assemblies, five light-emitting assemblies, seven light-emitting assemblies, eight light-emitting assemblies, etc. In the disclosure, merely that the light-emitting assembly 321 is implemented as three light-emitting assemblies is taken as an example for illustration. Each light-emitting assembly 321 includes a light-guiding strip 3211, a lamp bead 3212, and a circuit board 3213. The lamp bead 3212 is a light source for emitting light, which may be, but is not limited to, a light-emitting diode (LED). The light-guiding strip 3211 is configured to convert point-light-source illumination into surface-light-source illumination. The circuit board 3213 is disposed at one side of the light-guiding strip 3211. The light-guiding strip 3211 is disposed corresponding to the light-transmitting portion 312 on the decorative panel 310, allowing light to adequately reach the surroundings.

Referring to FIG. 8, the lamp bead 3212 is implemented as multiple lamp beads, where the "multiple" refers to that the number (quantity) is greater than or equal to two, which may be, but is not limited to, two, three, four, six, eight, nine, ten, etc. The disclosure is not limited in this regard. Further, the multiple lamp beads 3212 are spaced apart from each another along a lengthwise direction of the light-guiding strip 3211. It is to be understood that, such an arrangement can ensure that the light-guiding strip 3211 can uniformly receive light in the lengthwise direction of the light-guiding strip 3211, thereby ensuring that the decorative module 30 can emit light uniformly and can provide favorable illumination.

Referring to FIG. 7, the photoelectric module 320 further includes a connector 322 and a cable 323. The connector 322 is disposed at one side of the support plate 330 away from the decorative panel 310. The cable 323 passes through the support plate 330, one of two opposite ends of the cable 323 is connected to the circuit board 3213 in the light-emitting assembly 321, and the other one of the two opposite ends of the cable 323 is connected to the connector 322, that is, the connector 322 is electrically connected to the circuit board 3213 through the cable 323, thereby achieving electrical connection between the connector 322 and the lamp bead 3212 mounted on the circuit board 3213. The cable 323 is bendable within limits, thereby facilitating connecting of the connector 322 to the vehicle 1. The connector 322 is configured to be connected to the vehicle 1 in a pluggable form. It is to be understood that, the pluggable form means that an electrical connection between the decorative module 30 and the vehicle 1 is detachable, so that the decorative module 30 can be separately detached from the vehicle 1 for maintenance or replacement without damaging a connection point.

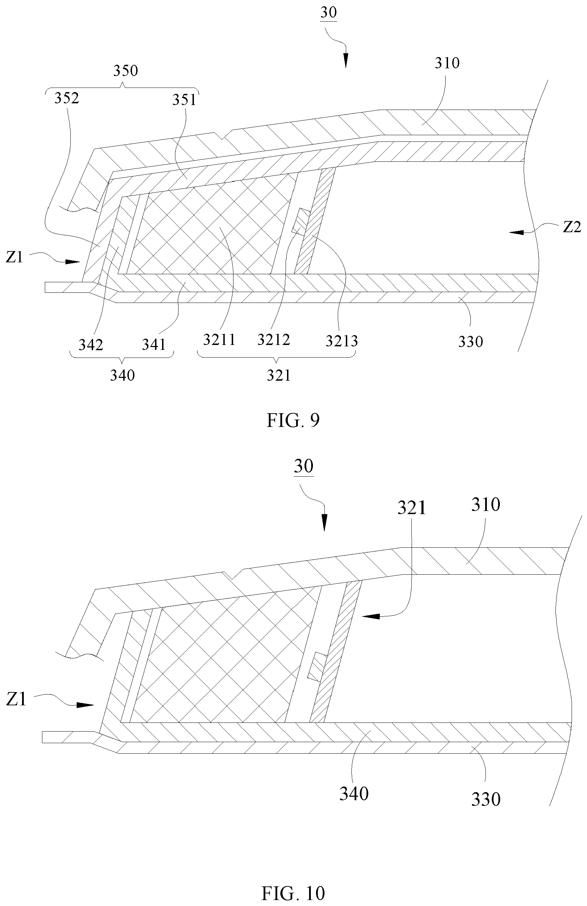

Referring to FIG. 9, in an embodiment, the decorative module 30 further includes a first cover plate 340 and a second cover plate 350. The first cover plate 340 and the second cover plate 350 are fitted together to define a second accommodating space Z2. The following will give a detailed illustration with reference to the accompanying drawings.

The first cover plate 340 includes a first plate 341 and a first frame 342. The first plate 341 faces the support plate 330. The first frame 342 is connected to a periphery of the first plate 341 in a bent manner in a direction in which the first frame 342 faces away from the support plate 330, that is, the first frame 342 is bent from the periphery of the first plate 341 towards the decorative panel 310.

The second cover plate 350 includes a second plate 351 and a second frame 352. The second plate 351 faces the decorative panel 310. The second frame 352 is connected to a periphery of the second plate 351 in a bent manner in a direction in which the second frame 352 faces away from the decorative panel 310, that is, the second frame 352 is bent from the periphery of the second plate 351 towards the support plate 330.

Further, the first cover plate 340 and the second cover plate 350 are fitted together to define the second accommodating space Z2, where the fitting means that the first frame 342 is inserted in the second frame 352, or that the second frame 352 is inserted in the first frame 342. In the disclosure, merely that the first frame 342 is inserted in the second frame 352 is taken as an example for illustration.

Further, the light-emitting assembly 321 is disposed in the second accommodating space Z2 defined by the first cover plate 340 and the second cover plate 350. It is to be understood that, with the first cover plate 340 and the second cover plate 350, the light-emitting assembly 321 can be further prevented from damage. Specifically, the decorative panel 310 and the support plate 330 serve as a first-level protective layer, and the first cover plate 340 and the second cover plate 350 serve as a second-level protective layer. The first-level protective layer and the second-level protective layer can effectively isolate the light-emitting assembly 321 from the surroundings, so as to better protect the light-emitting assembly 321.

Optionally, the first frame 342 of the first cover plate 340 and the second frame 352 of the second cover plate 350 are in a sealing connection. The sealing connection may be implemented by, but is not limited to, welding (e.g., fusing the first frame 342 and the second frame 352 together by laser welding), bonding (e.g., filling glue between the first frame 342 and the second frame 352 for bonding), elastic sealing (e.g., placing an elastic member in a gap between the first frame 342 and the second frame 352, with the elastic member being compressed by the first frame 342 and the second frame 352, one of two opposite sides of the elastic member elastically abutting against the first frame 342, and the other one of the two opposite sides of elastic member elastically abutting against the second frame 352, thus achieving sealing), etc. The sealing connection may further be implemented by other forms, which will not be described herein. It is to be understood that, with the sealing connection between the first cover plate 340 and the second cover plate 350, water resistance and dust prevention can be achieved, thereby prolonging the service life of the light-emitting assembly 321 and ensuring sustained and effective operation of the light-emitting assembly 321.

It is to be noted that, the second cover plate 350 is made of a material that can allow light to pass through, so as to ensure that the second cover plate 350 can allow the light emitted by the light-emitting assembly 321 to pass through. The second cover plate 350 may be made of, but is not limited to, polymethyl methacrylate (PMMA), PC, etc. The first cover plate 340 and the second cover plate 350 may be made of the same material, which is not limited herein.

Referring to FIG. 10, in another embodiment, the decorative module 30 further includes the first cover plate 340 accommodated in the first accommodating space Z1. This embodiment differs from the embodiment illustrated in FIG. 9 in that the second cover plate 350 is absent in this embodiment. That is, in this embodiment, only the first cover plate 340 is provided, and the second cover plate 350 is absent, and thus the space occupied by the first accommodating space Z1 can be reduced. Therefore, the decorative panel 310 can be disposed closer to the support plate 330, thereby reducing the overall thickness of the decorative module 30.

In another embodiment, the decorative module 30 further includes the second cover plate 350 accommodated in the first accommodating space Z1. This embodiment differs from the embodiment illustrated in FIG. 9 in that the first cover plate 340 is absent in this embodiment. That is, in this embodiment, only the second cover plate 350 is provided, and the first cover plate 340 is absent, and thus the space occupied by the first accommodating space Z1 can be reduced. Therefore, the decorative panel 310 can be disposed closer to the support plate 330, thereby reducing the overall thickness of the decorative module 30.

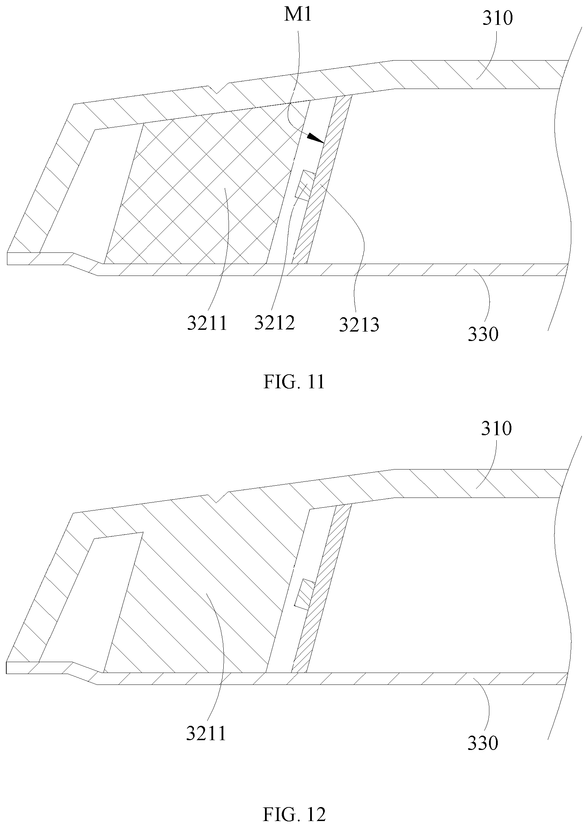

Referring to FIG. 11, in another embodiment, one of two opposite sides of the light-guiding strip 3211 abuts against the decorative panel 310, and the other one of the two opposite sides of the light-guiding strip 3211 abuts against the support plate 330. This embodiment differs from the embodiment illustrated in FIG. 9 in that the first cover plate 340 and the second cover plate 350 are both absent in this embodiment, and thus the space occupied by the first accommodating space Z1 can be further reduced. Therefore, the decorative panel 310 can be disposed closer to the support plate 330, thereby reducing the overall thickness of the decorative module 30.

Referring to FIG. 12, in another embodiment, the light-guiding strip 3211 and the decorative panel 310 are integrally formed. This embodiment differs from the embodiment illustrated in FIG. 11 in that the light-guiding strip 3211 and the decorative panel 310 are integrally formed in this embodiment. It is to be understood that, in the case where the light-guiding strip 3211 and the decorative panel 310 are integrally formed, there is no gap between the light-guiding strip 3211 and the decorative panel 310, thereby reducing the overall thickness of the decorative module 30. Optionally, the light-guiding strip 3211 and the decorative panel 310 are integrally formed by integrated injection molding.

Referring to FIG. 11, in another embodiment, the circuit board 3213 includes a mounting surface M1, and the lamp bead 3212 is mounted at one side of the circuit board 3213 where the mounting surface M1 is located. The circuit board 3213 is obliquely disposed at one side of the light-guiding strip 3211, the mounting surface M1 of the circuit board 3213 faces the light-guiding strip 3211, and the lamp bead 3212 disposed on the mounting surface M1 faces the light-guiding strip 3211. In other words, the light-guiding strip 3211 is located in a direction in which the lamp bead 3212 emits light, i.e., the lamp bead 3212 directly illuminates the light-guiding strip 3211. It is to be understood that, such an arrangement can allow the light-guiding strip 3211 to fully receive the light emitted by the lamp bead 3212, thereby improving light utilization and also ensuring that the light-guiding strip 3211 can exhibit a favorable glowing effect.

In the structure illustrated in FIG. 11, since the circuit board 3213 is vertically disposed, in order to ensure that the circuit board 3213 does not topple over when the vehicle 1 runs, two opposite sides of the circuit board 3213 in a width direction of the circuit board 3213 are required to abut against other components respectively. In FIG. 11, one of the two opposite sides of the circuit board 3213 in the width direction of the circuit board 3213 abuts against the decorative panel 310, and the other one of the two opposite sides of the circuit board 3213 in the width direction of the circuit board 3213 abuts against the support plate 330. FIG. 11 merely illustrates an exemplary structure, and in the decorative module 30 with another structure, the two opposite sides of the circuit board 3213 in the width direction of the circuit board 3213 may abut against other components, respectively. For example, in the structure illustrated in FIG. 9, one of the two opposite sides of the circuit board 3213 in the width direction of the circuit board 3213 abuts against the first cover plate 340, and the other one of the two opposite sides of the circuit board 3213 in the width direction of the circuit board 3213 abuts against the second cover plate 350. For various potential abutment forms, detailed illustration will not be given herein.

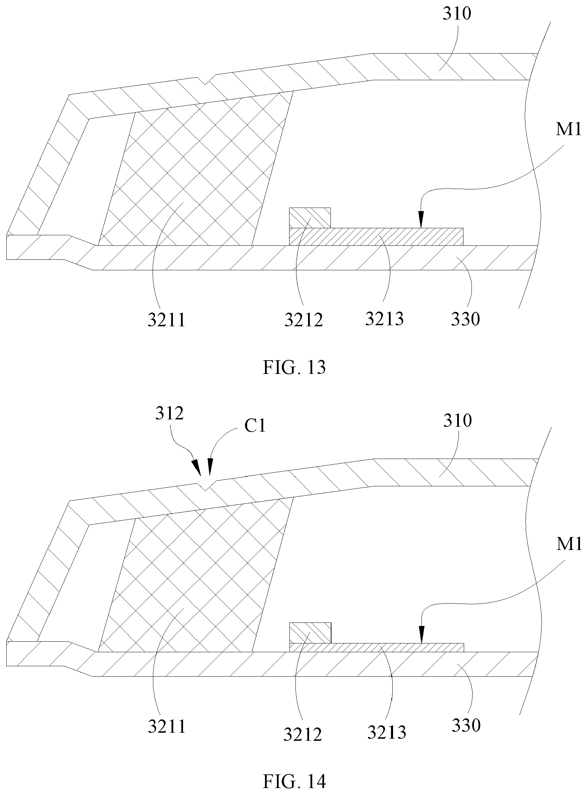

Referring to FIG. 13, in another embodiment, the circuit board 3213 includes the mounting surface M1, and the lamp bead 3212 is mounted at one side of the circuit board 3213 where the mounting surface M1 is located. The mounting surface M1 faces the decorative panel 310. That is, the mounting surface M1 is disposed opposite to the support plate 330, and the lamp bead 3212 disposed on the mounting surface M1 faces the decorative panel 310. It is to be understood that, compared with the structure illustrated in FIG. 11, the circuit board 3213 in the embodiment is disposed in a "lying" form between the decorative panel 310 and the support plate 330, so that there is no limitation on the distance between the decorative panel 310 and the support plate 330. In other words, the distance between the decorative panel 310 and the support plate 330 can be set to be smaller, thereby reducing the overall thickness of the decorative module 30.

Referring to FIG. 14, in another embodiment, the mounting surface M1 faces the decorative panel 310. That is, the mounting surface M1 is disposed opposite to the support plate 330, and the circuit board 3213 is a flexible printed circuit (FPC). It is to be noted that, this embodiment differs from the embodiment illustrated in FIG. 13 merely in that the circuit board 3213 is the FPC in this embodiment. Compared with a rigid printed circuit board (illustrated in FIG. 13), the FPC is thinner, and the lamp bead 3212 mounted on the FPC is closer to one side of the light-guiding strip 3211 away from the decorative panel 310. Therefore, the light-guiding strip 3211 can be set to be thinner. Accordingly, the decorative panel 310 can be set to be closer to the support plate 330, thereby reducing the overall thickness of the decorative module 30.

Optionally, in the foregoing structure in which the mounting surface M1 faces the decorative panel 310, the lamp bead 3212 is a side light-emitting lamp bead. That is, a light-emitting surface of the lamp bead 3212 faces the light-guiding strip 3211, so that the light-guiding strip 3211 can fully receive the light emitted by the lamp bead 3212, thereby improving light utilization and also ensuring that the light-guiding strip 3211 can exhibit a favorable glowing effect.

Referring to FIG. 14, optionally, a groove C1 is defined on an outer side of the decorative panel 310 that faces away from the light-guiding strip 3211, that is, the groove C1 is defined at one side of the light-transmitting portion 312 of the decorative panel 310 away from the light-guiding strip 3211. A cross-section shape of the groove C1 may be, but is not limited to, arc, triangle, trapezoid, etc. It is to be understood that, the presence of the groove C1 means a reduction in a thickness of an entity at the position of the groove C1, which is favorable for the light emitted from the light-guiding strip 3211 to pass through the light-transmitting portion 312 at the position of the groove C1, so that the vehicular window assembly 3 can provide favorable illumination. Optionally, the groove C1 extends along the lengthwise direction of the light-guiding strip 3211. In other words, a lengthwise direction of the groove C1 is the same as the lengthwise direction of the light-guiding strip 3211 (which is also a lengthwise direction of the light-transmitting portion 312). Such an arrangement can allow the light-transmitting portion 312 to emit light uniformly in the lengthwise direction of the light-transmitting portion 312. It is to be noted that, the groove C1 defined in the embodiment can be applied to other embodiments that do not contradict with the forgoing embodiments, and for specific setting, reference can be made to illustration herein, which will not be described in detail herein.

Referring to FIG. 15, the vehicle 1 is further provided in the disclosure. The vehicle 1 includes the vehicle frame 2 and the vehicular window assembly 3 described in any one of the above embodiments, where the vehicular window assembly 3 is mounted in the vehicle frame 2. The vehicle frame 2 refers to a skeleton of the vehicle 1, and is configured to support and connect various assemblies of the vehicle 1, to maintain relative position relations of the various assemblies, and to bear the weight of various components of the vehicle 1 and the impact, distortion, inertia force, etc., from which the vehicle 1 suffers during travelling of the vehicle 1. For specific structures of the vehicular window assembly 3, reference can be made to the accompanying drawings and illustrations in the embodiments.

The vehicle 1 may be, but is not limited to, a sedan, a multi-purpose vehicle (MPV), a sport/suburban utility vehicle (SUV), an off-road vehicle (ORV), a pick-up truck, a van, a bus, a goods vehicle, etc.

Referring to FIG. 16, the vehicle 1 further includes a controller 4. The controller 4 is electrically connectable to the photoelectric module 320 via the connector 322. The controller 4 is configured to send a control signal according to a state of the vehicle 1. The control signal is used to control a light-emitting state of the photoelectric module 320.

The state of the vehicle 1 may include, but is not limited to, an operating state of the vehicle 1 (e.g., an acceleration state, a braking state, etc.), a battery state (e.g., a charging state, a battery level state, etc.), a door state (a closed state, an open state, etc.), and the like. When the vehicle 1 is in a corresponding state, the controller 4 generates and sends a corresponding control signal to the photoelectric module 320, and upon receiving the control signal, the photoelectric module 320 presents a corresponding light-emitting state. The light-emitting state may include, but is not limited to, a state in which the light-guiding strip 3211 is constantly illuminated, a flickering state of the light-guiding strip 3211, a state in which light color of the light-guiding strip 3211 varies, a state in which brightness of the light-guiding strip 3211 varies, etc.

For example, when the vehicle 1 is in the acceleration state, the controller 4 controls brightness of the light emitted by the photoelectric module 320 to gradually increase with an increase in a speed of the vehicle 1. When the vehicle 1 is in a deceleration state, the controller 4 controls the brightness of the light emitted by the photoelectric module 320 to gradually decrease with a decrease in a speed of the vehicle 1. For another example, when a battery is in a high battery level state, the controller 4 controls the photoelectric module 320 to emit green light. When the battery is in a low battery level state, the controller 4 controls the photoelectric module 320 to emit red light. For another example, when a vehicle door is in the open state, the controller 4 controls the photoelectric module 320 to flicker. When the vehicle door is in the closed state, the controller 4 controls the photoelectric module 320 to be turned off.

It is to be noted that, a correlation between the state of the vehicle 1 and the light-emitting state of the photoelectric module 320 may depend on actual requirements. The foregoing merely gives an exemplary illustration, and other feasible embodiments will not be described here.

It is further to be noted that, the photoelectric module 320 may further include other electronic components, such as an ultra-wideband (UWB) module, a Bluetooth module, a loudspeaker module, a distance measuring module, etc. Taking the distance measuring module as an example for illustration, the distance measuring module may be an ultrasonic sensor. The ultrasonic sensor is configured to emit ultrasonic waves outwardly, so as to sense an obstacle(s) around the vehicle 1 and measure a distance between the obstacle(s) and the vehicle 1, thereby facilitating a driver to carry out a correct driving operation based on the current distance. The obstacle(s) may be a pedestrian(s), other vehicle(s), a tree(s), and the like.

Further, the electronic components above may also be used in combination with the light-emitting assembly 321. Taking the distance measuring module as an example for illustration, the distance measuring module is electrically connected to the controller 4 of the vehicle 1 via the connector 322. The controller 4 can obtain in real time a distance measured by the distance measuring module and make a determination. When determining that the distance between the vehicle 1 and an obstacle is too small, the controller 4 can send a control signal to the light-emitting assembly 321. Upon receiving the control signal, the light-emitting assembly 321 can present a corresponding light-emitting state (e.g., flickering state, etc.), so as to alert a pedestrian(s) or a driver(s) of other vehicle(s) to avoid a crash.

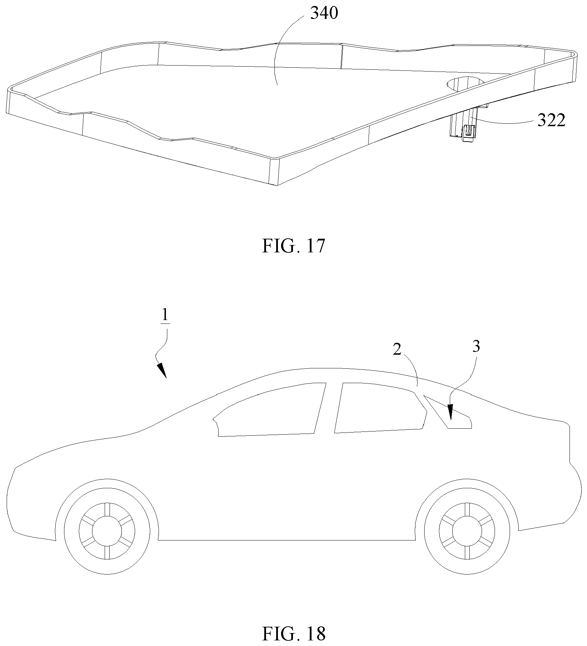

Referring to FIG. 17, optionally, the first cover plate 340 and the connector 322 are integrally formed. The first cover plate 340 and the connector 322 may be formed by, but are not limited to, integrated injection molding. It is to be understood that, in the case where the first cover plate 340 and the connector 322 are integrally formed, the strength of the connector 322 can be enhanced. Therefore, the photoelectric module 320 can remain in electrical connection with the vehicle 1, ensuring a favorable glowing effect.

Referring to FIG. 18, the vehicle 1 is provided in the disclosure. The vehicle 1 includes the vehicle frame 2 and the vehicular window assembly 3 described in any one of the following embodiments, where the vehicular window assembly 3 is mounted in the vehicle frame 2. The vehicle frame 2 refers to a skeleton of the vehicle 1, and is configured to support and connect various assemblies of the vehicle 1, to maintain relative position relations of the various assemblies, and to bear the weight of various components of the vehicle 1 and the impact, distortion, inertia force, etc., from which the vehicle 1 suffers during travelling of the vehicle 1. The vehicular window assembly 3 may be, but is not limited to, a corner window (also referred to as a quarter window). In the disclosure, the quarter window is merely taken as an example for illustration.

The vehicle 1 may be, but is not limited to, a sedan, an MPV, an SUV, an ORV, a pick-up truck, a van, a bus, a goods vehicle, etc.

The following will give a detailed illustration of the vehicular window assembly 3 in the vehicle 1 provided in the foregoing embodiments with reference to the accompanying drawings.

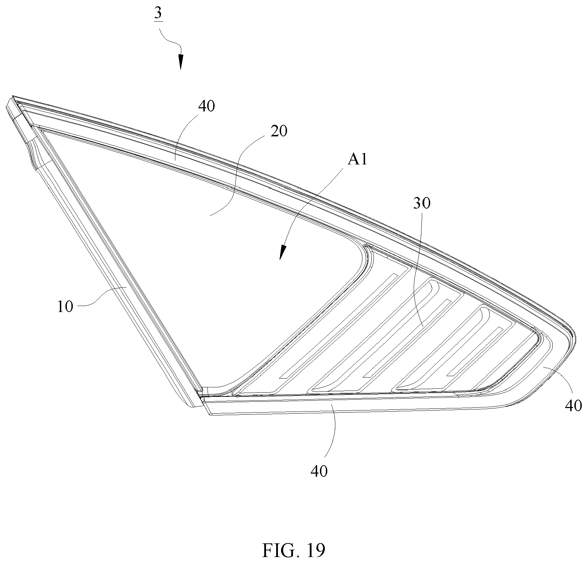

Referring to FIG. 19 to FIG. 20, a vehicular window assembly 3 is further provided in the disclosure. The vehicular window assembly 3 includes a molding 10, a decorative strip 40, a light-transmitting member 20, and a decorative module 30.

The molding strip 10 surrounds a space to define an accommodating region A1. The light-transmitting member 20 and the decorative module 30 both are disposed in the accommodating area A1. The molding strip 10 is configured to coat a periphery of the light-transmitting member 20 and a periphery of the decorative module 30 to protect the light-transmitting member 20 and the decorative module 30. Further, the molding strip 10 is configured to connect the light-transmitting member 20 and the decorative module 30 into an integral body, so that it is easy to mount the light-transmitting member 20 and the decorative module 30 to a vehicle frame 2. The molding strip 10 may be made of, but is not limited to, TPE, PU, PVC, and the like.

The decorative strip 40 is disposed on the molding strip 10 and surrounds the accommodating region A1. In other words, the decorative strip 40 is disposed on the molding strip 10 along a contour of the molding strip 10. As illustrated in FIG. 19, in the disclosure, a part of the decorative strip 40 is disposed at a part of a periphery of the light-transmitting member 20, and the remaining part of the decorative strip 40 is disposed at a part of a periphery of the decorative module 30. It is to be understood that, the decorative strip 40 is disposed around a periphery of the vehicular window assembly 3, thereby accentuating the design of the vehicular window assembly 3 and achieving a favorable decorative effect. The decorative strip 40 may be made of, but is not limited to, aluminium alloy, stainless steel, and the like. A metal material has reflective properties, enhancing the decorative effect.

The light-transmitting member 20 is configured to allow light to pass through, so as to guarantee adequate light in the vehicle 1. The light-transmitting member 20 may be, but is not limited to, a glass panel (e.g., a clean glass panel, a grey glass panel, etc. that can serve as an automotive glass panel). In other embodiments, the light-transmitting member 20 may also be made of other materials that can allow light to pass through other than glass. The disclosure is not limited in this regard.

The decorative module 30 includes a decorative panel 310, a photoelectric module 320, and a support plate 330. The decorative panel 310 is exposed to the outside of the vehicle 1 for decoration. The decorative panel 310 and the support plate 330 are disposed opposite to each other to define a first accommodating space Z1. The photoelectric module 320 can emit light towards the decorative panel 310 and is at least partially disposed in the first accommodating space Z1. That is, the photoelectric module 320 is at least partially located between the decorative panel 310 and the support plate 330, so that the photoelectric module 320 can be protected.

Further, in the related art, the decorative panel 310 is made of aluminium. In the disclosure, the decorative panel 310 may be made of, but is not limited to, plastic, and the decorative panel 310 may be, but is not limited to, white, yellow, grey, and the like. It is to be understood that, usage of plastic instead of aluminum can bring following benefits. 1. Cost reduction: since a plastic molding process is simpler, material cost can be reduced when plastic rather than aluminum is used. 2. Lightweight: compared with a metal decorative panel, a plastic decorative panel is more light. 3. Decoration: since a molding process and a surface treatment process for the plastic decorative panel such as in-mold labeling (IML), laser etching, spraying and so on are mature, the plastic decorative panel can offer excellent decoration. 4. Function matching: plastic members with complicated shapes are easily molded and have good optical properties (high light transmittance and low refractive index).

As described above, the vehicular window assembly 3 provided in the disclosure includes the molding strip 10, the light-transmitting member 20, and the decorative panel 310. The light-transmitting member 20 and the decorative panel 310 are connected into an integral body via the molding strip 10. The decorative panel 310 includes the decorative panel 310, the photoelectric module 320, and the support plate 330. The photoelectric module 320 can emit light and is at least partially accommodated in the first accommodating space Z1 defined cooperatively by the decorative panel 310 and the support plate 330. In other words, the decorative panel 310 is disposed at one side of the photoelectric module 320, and the support plate 330 is disposed at the other one side of the photoelectric module 320, so as to separate the photoelectric module 320 from the surroundings. Therefore, the photoelectric module 320 can be well protected.

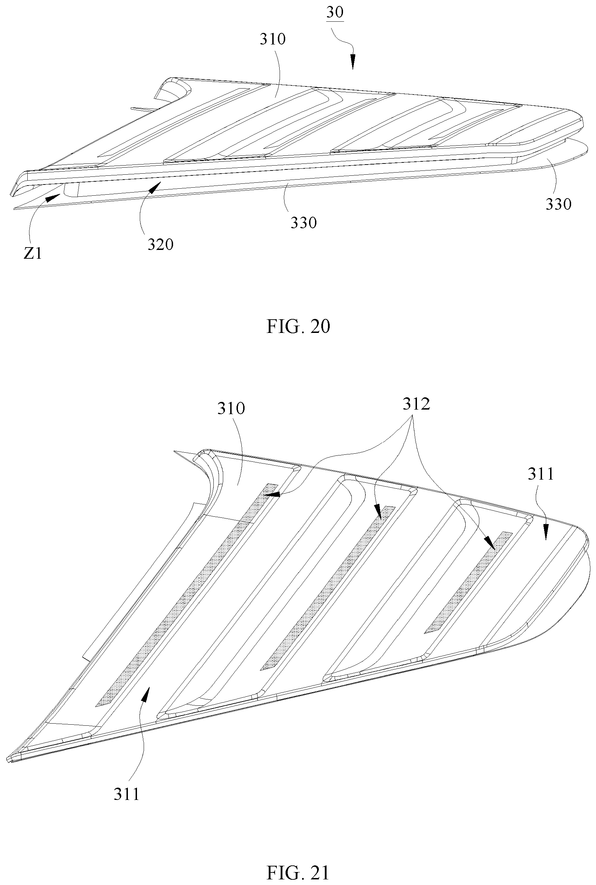

Referring to FIG. 21, the decorative panel 310 includes a light-shielding portion 311 and multiple light-transmitting portions 312, where the "multiple" refers to that the number (quantity) is greater than or equal to two, which may be, but is not limited to, two, three, five, six, eight, and the like. Light transmittance of the light-shielding portion 311 is lower than light transmittance of the light-transmitting portion 312. It is to be noted that, the light transmittance of the light-transmitting portion 312 is greater than zero, which means that the light-transmitting portion 312 can allow the light emitted by the photoelectric module 320 to pass through. The light transmittance of the light-shielding portion 311 may be equal to or greater than zero, which means that the light-shielding portion 311 cannot allow the light emitted by the photoelectric module 320 to pass through, or that the light-shielding portion 311 can only allow a small amount of the light emitted by the photoelectric module 320 to pass through and the light-shielding portion 311 can allow less light to pass through than the light-transmitting portion 312 can.

Further, the multiple light-transmitting portions 312 are spaced apart from each another. The light-shielding portion 311 encircles a periphery of each of the light-transmitting portions 312. In other words, the multiple light-transmitting portions 312 are dispersedly disposed at intervals on the decorative panel 310, and the remaining part of the decorative panel 310 is the light-shielding portion 311. When the photoelectric module 320 emits light, multiple light strips that are spaced apart from each another are formed on the decorative panel 310, enhancing the technological appeal of the vehicular window assembly 3.

Optionally, the light-transmitting portion 312 is bar-shaped, and a width of the light-transmitting portion 312 is greater than or equal to 2 mm.

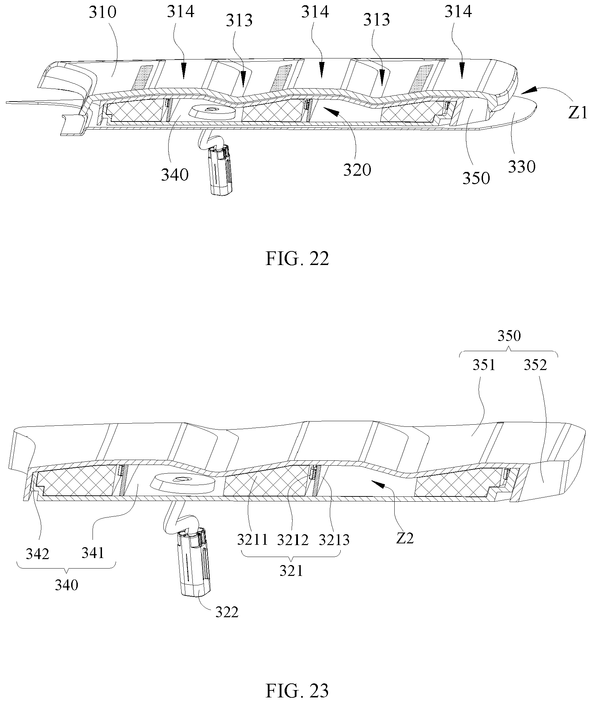

Referring to FIG. 22, the decorative panel 310 includes concave portions 313 and convex portions 314 that are sequentially connected in a bent manner in a direction in which the decorative module 30 faces the light-transmitting member 20, that is, the decorative panel 310 has a continuous undulating shape. Each light-transmitting portion 312 is located at one concave portion 313, or located at one convex portion 314, or located between one concave portion 313 and one convex portion 314.

Specifically, in an embodiment, each of all the light-transmitting portions 312 is located at one concave portion 313. In another embodiment, each of all the light-transmitting portions 312 is located at one convex portion 314. In yet another embodiment, each of some of the light-transmitting portions 312 is located at one convex portion 314, while each of the remaining light-transmitting portions 312 is located at one concave portion 313. In yet another embodiment, each of all the light-transmitting portions 312 is located at one convex portion 314, or each of all the light-transmitting portions 312 is located between one concave portion 313 and one convex portion 314. There is no limitation on the above embodiments of the disclosure. It is to be understood that, with the concave portions 313 and the convex portions 314, the light-transmitting portion 312 is curved, and thus the light emitted by the photoelectric module 320 can undergo refraction when passing through the light-transmitting portion 312, thereby expanding the illumination range.

Optionally, a curved surface of the light-transmitting portion 312 has a curvature radius ranging from -1500 mm to 1500 mm, that is, the concave portion 313 at the decorative panel 310 has a curvature radius ranging from -1500 mm to 1500 mm, and the convex portion 314 at the decorative panel 310 has a curvature radius ranging from -1500 mm to 1500 mm.

Referring to FIG. 22 to FIG. 23, the decorative module 30 further includes a first cover plate 340 and a second cover plate 350 that are both accommodated in the first accommodating space Z1. The first cover plate 340 includes a first plate 341 and a first frame 342. The first plate 341 faces the support plate 330. The first frame 342 is connected to a periphery of the first plate 341 in a bent manner in a direction in which the first frame 342 faces away from the support plate 330, that is, the first frame 342 is bent from the periphery of the first plate 341 towards the decorative panel 310. The second cover plate 350 includes a second plate 351 and a second frame 352. The second plate 351 faces the decorative panel 310. The second frame 352 is connected to a periphery of the second plate 351 in a bent manner in a direction in which the second frame 352 faces away from the decorative panel 310, that is, the second frame 352 is bent from the periphery of the second plate 351 towards the support plate 330.

The first cover plate 340 and the second cover plate 350 are fitted together to define a second accommodating space Z2, where the fitting means that the first frame 342 is inserted in the second frame 352, or that the second frame 352 is inserted in the first frame 342. In the disclosure, merely that the first frame 342 is inserted in the second frame 352 is taken as an example for illustration.

Further, the photoelectric module 320 includes multiple light-emitting assemblies 321 that are configured to emit light. The multiple light-emitting assemblies 321 are accommodated in the second accommodating space Z2, and different light-emitting assemblies 321 face different light-transmitting portions 312 at the decorative panel 310, respectively, i.e., the light-emitting assemblies 321 are disposed in one-to-one correspondence with the light-transmitting portions 312. It is to be noted that, light emitted by the light-emitting assemblies 321 can pass through the second cover plate 350, i.e., the second cover plate 350 is made of a material that can allow light to pass through.

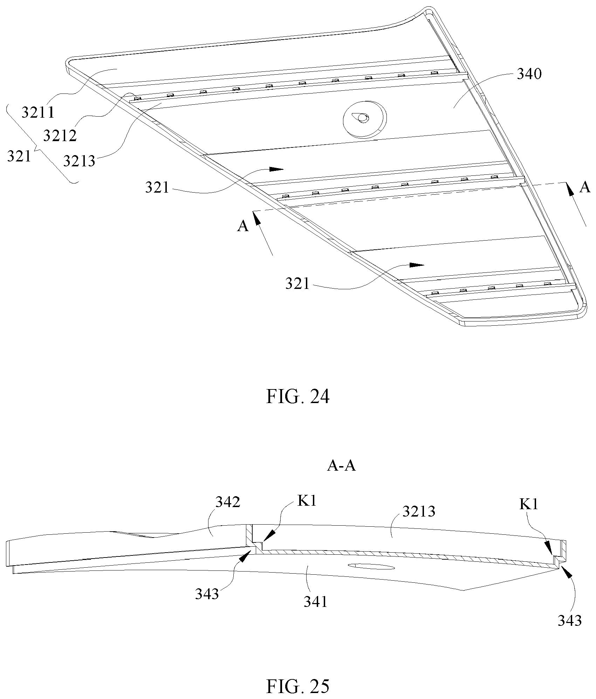

Referring to FIG. 23 and FIG. 24, the light-emitting assembly 321 includes a light-guiding strip 3211, a lamp bead 3212, and a circuit board 3213. The lamp bead 3212 is a light source for emitting light, which may be, but is not limited to, an LED. The light-guiding strip 3211 is configured to convert point-light-source illumination into surface-light-source illumination. The circuit board 3213 is disposed at one side of the light-guiding strip 3211. The lamp bead 3212 is mounted on the circuit board 3213.

Further, the circuit board 3213 is obliquely disposed at the first cover plate 340, and the lamp bead 3212 is mounted at one side of the circuit board 3213 that faces the light-guiding strip 3211, i.e., the lamp bead 3212 faces the light-guiding strip 3211. Such an arrangement can make the light-guiding strip 3211 fully receive the light emitted by the lamp bead 3212, so that it can be ensured that the light-guiding strip 3211 can effectively emit light, resulting in that the decorative module 30 can provide favorable illumination.

Referring to FIG. 23, the photoelectric module 320 further includes a connector 322 disposed at one side of the first cover plate 340 away from the second cover plate 350. The connector 322 is electrically connected to the circuit board 3213 via a cable, thereby achieving electrical connection between the connector 322 and the lamp bead 3212.

Optionally, the vehicular window assembly 3 is electrically connected to a control system of the vehicle 1 via the connector 322, so that the vehicular window assembly 3 can be configured to display a state of the vehicle 1. The state of the vehicle 1 may include, but is not limited to, an operating state of the vehicle 1 (e.g., an acceleration state, a braking state, etc.), a battery state (e.g., a charging state, a low battery level state, etc.), a door state (an open state, a closed state, etc.), and the like. A driver or a manufacturer can set according to requirements that different states of the vehicle 1 respectively correspond to different display states of the light-guiding strip 3211 in the vehicular window assembly 3, for example, a state in which the light-guiding strip 3211 is constantly illuminated, a flickering state of the light-guiding strip 3211, or a state in which light color of the light-guiding strip 3211 varies, etc.

It is to be noted that, the photoelectric module 320 may further include other components, such as an UWB module, a Bluetooth module, etc., which can be set according to the requirements and will not be limited herein.

Referring to FIG. 24, the lamp bead 3212 is implemented as multiple lamp beads, where the "multiple" refers to that the number (quantity) is greater than or equal to two, which may be specifically two, three, four, six, eight, nine, ten, etc. The disclosure is not limited in this regard. Further, the multiple lamp beads 3212 are spaced apart from each another along a lengthwise direction of the light-guiding strip 3211. It is to be understood that, such an arrangement can enable the light-guiding strip 3211 to uniformly receive light in the lengthwise direction of the light-guiding strip 3211, thereby ensuring that the decorative module 30 can emit light uniformly and can provide favorable illumination.

Referring to FIG. 25, a joint of the first plate 341 and the first frame 342 of the first cover plate 340 are provided with step structures 343, two opposite sides of the circuit board 3213 respectively define notches K1, and each step structure 343 is received in one notch K1. It is to be understood that, when travelling, the vehicle 1 remains in slight or severe jolts, and the circuit board 3213 may topple over due to the jolts, so that the light-guiding strip 3211 cannot fully receive the light from the lamp bead 3212. In the embodiment, each step structure 343 fits with one notch K1, and thus the circuit board 3213 can be prevented from toppling over, thereby ensuring that the light-guiding strip 3211 can fully receive the light from the lamp bead 3212.

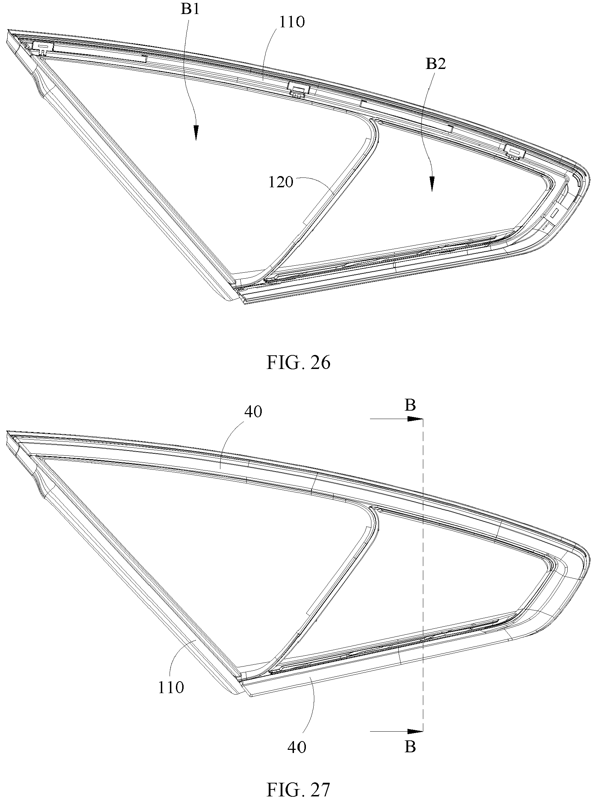

Referring to FIG. 26, the molding strip 10 includes a first molding strip 110 and a second molding strip 120. The first molding strip 110 surrounds a space to define a closed loop, and the closed loop constitutes an accommodating region A1. As illustrated in FIG. 27, the decorative strip 40 is disposed on the first molding strip 110 and surrounds the accommodating region A1. The second molding strip 120 is connected to two opposite sides of the first molding strip 110 to separate the accommodating region A1 into a first region B1 and a second region B2. The light-transmitting member 20 is disposed in the first region B1, and the decorative module 30 is disposed in the second region B2.

Optionally, an orthographic projection of the light-transmitting member 20 in the first region B1 falls entirely within the first region B1, and an orthographic projection of the decorative module 30 in the second region B2 falls entirely within the second region B2. That is, the orthographic projection of the light-transmitting member 20 in the accommodating region A1 does not overlap the orthographic projection of the decorative module 30 in the accommodating region A1, thereby reducing an overall thickness of the vehicular window assembly 3.

It is to be understood that, with the second molding strip 120, the second molding strip 120 can coat both the light-transmitting member 20 and the decorative module 30, thereby making a connection among the molding strip 10, the light-transmitting member 20, and the decorative module 30 more reliable. In addition, the vehicle 1 remains in a bumpy state when travelling, but a collision between the light-transmitting member 20 and the decorative module 30 can be avoided due to that the light-transmitting member 20 is separated from the decorative module 30 by the second molding strip 120. From this perspective, the second molding strip 120 plays a protective role.

Optionally, an area of the orthographic projection of the light-transmitting member 20 in the first region B1 is a first area. An area of the orthographic projection of the decorative module 30 in the second region B2 is a second area. A sum of the first area and the second area is a third area. The first area is 25%~75% of the third area. It is to be understood that, in the case where the vehicular window assembly 3 is applied to the vehicle 1 and a size of the light-transmitting member 20 is relatively small, an amount of light that can pass through the light-transmitting member 20 is relatively small. As a result, the rear of the vehicle 1 is relatively dark, and the field of view available to a passenger(s) in the rear seat(s) is relatively narrow, so that the passenger(s) in the rear seat(s) may feel depressed. In addition, when the decorative module 30 is too small, the decorative module 30 cannot decorate the vehicle 1. Therefore, as described above, the first area is set to be 25%~75% of the third area, and thus not only the requirements of the passenger(s) in the rear seat(s) for light and field of view can be satisfied, but also the decorative module 30 can possess an ample size suitable for decoration.

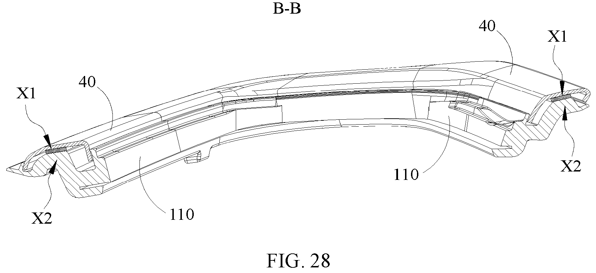

Referring to FIG. 27 to FIG. 28, the decorative strip 40 includes a first fitting portion X1, and the first molding strip 110 is provided with a second fitting portion X2. The decorative strip 40 is connected to the second fitting portion X2 via fitting between the first fitting portion X1 and the second fitting portion X2. In an embodiment, the first fitting portion X1 is a recess, and the second fitting portion X2 is a convex. In another embodiment, the first fitting portion X1 is a convex, and the second fitting portion X2 is a recess. In the forgoing manners, connection is realized via fitting between a recess and a convex. In addition, other types of the first fitting portion X1 and the second fitting portion X2 may be used, which will not be described herein. It is to be understood that, with the first fitting portion X1 and the second fitting portion X2, it is easy to mount the decorative strip 40 on the first molding strip 110. The first fitting portion X1 and the second fitting portion X2 can play a positioning role, so that installation precision of the decorative strip 40 can also be guaranteed.

It is to be noted that, a fixed connection between the decorative strip 40 and the first molding strip 110 may be a detachable connection or a non-detachable connection. The detachable connection may be implemented by, but is not limited to, a threaded connection member. The non-detachable connection may refer to bonding implemented by, but is not limited to, dispensing or adhesive.

## Claims

1. A vehicular window assembly (3), comprising:
a molding strip (10), wherein the molding strip (10) surrounds a space to define an accommodating region (A1), and the accommodating region (A1) comprises a first region (B1) and a second region (B2);
a light-transmitting member (20) disposed in the first region (B1); and
a decorative module (30) disposed in the second region (B2),
wherein the decorative module (30) comprises a decorative panel (310), a photoelectric module (320), and a support plate (330), wherein the decorative panel (310) and the support plate (330) are disposed opposite to each other to cooperatively define a first accommodating space (Z1), the photoelectric module (320) comprises a light-emitting assembly (321), the light-emitting assembly (321) is accommodated in the first accommodating space (Z1), the light-emitting assembly (321) is configured to emit light, and at least a part of the decorative panel (310) is configured to allow the light to pass through, and
wherein the decorative module further comprises any of:
(a) a first cover plate (340) accommodated in the first accommodating space (Z1), wherein the first cover plate (340) comprises a first plate (341) and a first frame (342), the first plate (341) faces the support plate (330), the first frame (342) is connected to a periphery of the first plate (341) in a bent manner in a direction in which the first frame (342) faces away from the support plate (330), and the light-emitting assembly (321) is disposed at one side of the first plate (341) away from the support plate (330); or
(b) a second cover plate (350) accommodated in the first accommodating space (Z1), wherein the second cover plate (350) comprises a second plate (351) and a second frame (352), the second plate (351) faces the decorative panel (310), the second frame (352) is connected to a periphery of the second plate (351) in a bent manner in a direction in which the second frame (352) faces away from the decorative panel (310), and the light-emitting assembly (321) is disposed at one side of the second plate (351) away from the decorative panel (310); or
(c) a first cover plate (340) and a second cover plate (350), wherein the first cover plate (340) and the second cover plate (350) are fitted together to define a second accommodating space (Z2), and the light-emitting assembly (321) is disposed in the second accommodating space (Z2).

2. The vehicular window assembly (3) of claim 1, wherein the light-emitting assembly (321) is implemented as at least one light-emitting assembly (321), and each of the at least one light-emitting assembly (321) comprises a light-guiding strip (3211), a lamp bead (3212), and a circuit board (3213), wherein the light-guiding strip (3211) is configured to convert point-light-source illumination into surface-light-source illumination, the circuit board (3213) is disposed at one side of the light-guiding strip (3211), and the lamp bead (3212) is mounted on the circuit board (3213).

3. The vehicular window assembly (3) of claim 2, wherein one of two opposite sides of the light-guiding strip (3211) abuts against the decorative panel (310), and the other one of the two opposite sides of the light-guiding strip (3211) abuts against the support plate (330).

4. The vehicular window assembly (3) of claim 2, wherein the circuit board (3213) comprises a mounting surface (M1), the lamp bead (3212) is mounted at one side of the circuit board (3213) where the mounting surface (M1) is located, and the mounting surface (M1) faces the light-guiding strip (3211).

5. The vehicular window assembly (3) of claim 2, wherein the circuit board (3213) comprises a mounting surface (M1), the lamp bead (3212) is mounted at one side of the circuit board (3213) where the mounting surface (M1) is located, and the mounting surface (M1) faces the decorative panel (310).

6. The vehicular window assembly (3) of any of claims 1 to 5, wherein the decorative panel (310) comprises a light-shielding portion (311) and a plurality of light-transmitting portions (312), wherein the plurality of the light-transmitting portions (312) are spaced apart from each another, the light-shielding portion (311) encircles a periphery of each of the light-transmitting portions (312), and the light-shielding portion (311) has lower light transmittance than each of the light-transmitting portions (312).

7. The vehicular window assembly (3) of claim 6, wherein the decorative panel (310) comprises concave portions (313) and convex portions (314) that are sequentially connected in a bent manner in a direction in which the decorative module (30) faces the light-transmitting member (20), and each of the light-transmitting portions (312) is located at one of the concave portions (313), or located at one of the convex portions (314), or located between one of the concave portions (313) and one of the convex portions (314).

8. The vehicular window assembly (3) of any one of claims 1-7, further comprising a decorative strip (40), wherein the decorative strip (40) is disposed on the molding strip (110) and surrounds the accommodating region (A1).

9. The vehicular window assembly (3) of claim 8, wherein the molding strip (110) comprises a first molding strip (110) and a second molding strip (120), wherein the first molding strip (110) surrounds a space to define the accommodating region (A1), the decorative strip (40) is disposed on the first molding strip (110) and surrounds the accommodating region (A1), the second molding strip (120) is connected to the first molding strip (110) to separate the accommodating region (A1) into the first region (B1) and the second region (B2).

10. The vehicular window assembly (3) of any one of claims 1-9, wherein an area of an orthographic projection of the light-transmitting member (20) in the first region (B1) is a first area, an area of an orthographic projection of the decorative module (30) in the second region (B2) is a second area, and a sum of the first area and the second area is a third area, wherein the first area is 25%~75% of the third area.

11. A vehicle (1), comprising a vehicle frame (2) and the vehicular window assembly (3) of any one of claims 1 to 10, wherein the vehicular window assembly (3) is mounted in the vehicle frame (2).

## Patentansprüche

1. Fahrzeugfensteranordnung (3), umfassend:
eine Leiste (10), wobei die Leiste (10) einen Raum umgibt, um eine Aufnahmeregion (A1) zu definieren, und die Aufnahmeregion (A1) eine erste Region (B1) und eine zweite Region (B2) umfasst;
ein Lichttransmissionselement (20), das in der ersten Region (B1) angeordnet ist; und
ein Dekormodul (30), das in der zweiten Region (B2) angeordnet ist,
wobei das Dekormodul (30) eine Dekorplatte (310), ein photoelektrisches Modul (320) und eine Stützplatte (330) umfasst, wobei die Dekorplatte (310) und die Stützplatte (330) einander gegenüberliegend angeordnet sind, um zusammenwirkend einen ersten Aufnahmeraum (Z1) zu definieren, wobei das photoelektrische Modul (320) eine lichtemittierende Anordnung (321) umfasst, wobei die lichtemittierende Anordnung (321) im ersten Aufnahmeraum (Z1) aufgenommen ist, wobei die lichtemittierende Anordnung (321) dazu ausgelegt ist, Licht zu emittieren, und zumindest ein Teil der Dekorplatte (310) dazu ausgelegt ist, dem Licht zu ermöglichen, hindurchzutreten, und
wobei das Dekormodul ferner eines aus folgenden umfasst:
(a) eine erste Abdeckplatte (340), die in dem ersten Aufnahmeraum (Z1) aufgenommen ist, wobei die erste Abdeckplatte (340) eine erste Platte (341) und einen ersten Rahmen (342) umfasst, wobei die erste Platte (341) der Stützplatte (330) zugewandt ist, wobei der erste Rahmen (342) mit einem Umfang der ersten Platte (341) auf gebogene Weise in einer Richtung, in der der erste Rahmen (342) von der Stützplatte (330) weggewandt ist, verbunden ist, und die lichtemittierende Anordnung (321) auf einer Seite der ersten Platte (341) weg von der Stützplatte (330) angeordnet ist; oder
(b) eine zweite Abdeckplatte (350), die in dem ersten Aufnahmeraum (Z1) aufgenommen ist, wobei die zweite Abdeckplatte (350) eine zweite Platte (351) und einen zweiten Rahmen (352) umfasst, wobei die zweite Platte (351) der Dekorplatte (310) zugewandt ist, wobei der zweite Rahmen (352) mit einem Umfang der zweiten Platte (351) auf gebogene Weise in einer Richtung, in der der zweite Rahmen (352) von der Dekorplatte (310) weggewandt ist, verbunden ist, und die lichtemittierende Anordnung (321) auf einer Seite der zweiten Platte (351) weg von der Dekorplatte (310) angeordnet ist; oder
(c) eine erste Abdeckplatte (340) und eine zweite Abdeckplatte (350), wobei die erste Abdeckplatte (340) und die zweite Abdeckplatte (350) zusammengefügt sind, um einen zweiten Aufnahmeraum (Z2) zu definieren, und die lichtemittierende Anordnung (321) in dem zweiten Aufnahmeraum (Z2) angeordnet ist.

2. Fahrzeugfensteranordnung (3) nach Anspruch 1, wobei die lichtemittierende Anordnung (321) als zumindest eine lichtemittierende Anordnung (321) umgesetzt ist und jede aus der zumindest einen lichtemittierenden Anordnung (321) einen lichtführenden Streifen (3211), eine Lampenperle (3212) und eine Leiterplatte (3213) umfasst, wobei der lichtführende Streifen (3211) dazu ausgelegt ist, Punktlichtquellen-Beleuchtung in Oberflächenlichtquellen-Beleuchtung umzuwandeln, wobei die Leiterplatte (3213) auf einer Seite des lichtführenden Streifens (3211) angeordnet ist und die Lampenperle (3212) auf der Leiterplatte (3213) angebracht ist.

3. Fahrzeugfensteranordnung (3) nach Anspruch 2, wobei eine aus zwei entgegengesetzten Seiten des lichtführenden Streifens (3211) an der Dekorplatte (310) anliegt und die andere aus den zwei entgegengesetzten Seiten des lichtführenden Streifens (3211) an der Stützplatte (330) anliegt.

4. Fahrzeugfensteranordnung (3) nach Anspruch 2, wobei die Leiterplatte (3213) eine Montagefläche (M1) umfasst, wobei die Lampenperle (3212) auf einer Seite der Leiterplatte (3213), auf der die Montagefläche (M1) angeordnet ist, angebracht ist, und die Montagefläche (M1) dem lichtführenden Streifen (3211) zugewandt ist.

5. Fahrzeugfensteranordnung (3) nach Anspruch 2, wobei die Leiterplatte (3213) eine Montagefläche (M1) umfasst, wobei die Lampenperle (3212) auf einer Seite der Leiterplatte (3213), auf der die Montagefläche (M1) angeordnet ist, angebracht ist, und die Montagefläche (M1) der Dekorplatte (310) zugewandt ist.

6. Fahrzeugfensteranordnung (3) nach einem der Ansprüche 1 bis 5, wobei die Dekorplatte (310) einen lichtabschirmenden Abschnitt (311) und eine Vielzahl von lichtdurchlässigen Abschnitten (312) umfasst, wobei die Vielzahl von lichtdurchlässigen Abschnitten (312) voneinander beabstandet sind, der lichtabschirmende Abschnitt (311) einen Umfang von jedem aus den lichtdurchlässigen Abschnitten (312) umschließt und der lichtabschirmende Abschnitt (311) eine geringere Lichtdurchlässigkeit als jeder aus den lichtdurchlässigen Abschnitten (312) aufweist.

7. Fahrzeugfensteranordnung (3) nach Anspruch 6, wobei die Dekorplatte (310) konkave Abschnitte (313) und konvexe Abschnitte (314) umfasst, die nacheinander auf gebogene Weise in einer Richtung, in der das Dekormodul (30) dem lichtdurchlässigen Element (20) zugewandt ist, verbunden sind, und jeder aus den lichtdurchlässigen Abschnitten (312) an einem der konkaven Abschnitte (313) angeordnet ist oder an einem der konvexen Abschnitte (314) angeordnet ist oder zwischen einem aus den konkaven Abschnitten (313) und einem aus den konvexen Abschnitten (314) angeordnet ist.

8. Fahrzeugfensteranordnung (3) nach einem der Ansprüche 1 bis 7, ferner umfassend einen Dekorstreifen (40), wobei der Dekorstreifen (40) auf der Leiste (110) angeordnet ist und die Aufnahmeregion (A1) umgibt.

9. Fahrzeugfensteranordnung (3) nach Anspruch 8, wobei die Leiste (110) eine erste Leiste (110) und eine zweite Leiste (120) umfasst, wobei die erste Leiste (110) einen Raum zum Definieren der Aufnahmeregion (A1) umgibt, wobei der Dekorstreifen (40) auf der ersten Leiste (110) angeordnet ist und die Aufnahmeregion (A1) umgibt, wobei die zweite Leiste (120) mit der ersten Leiste (110) verbunden ist, um die Aufnahmeregion (A1) in die ersten Region (B1) und die zweite Region (B2) zu unterteilen.

10. Fahrzeugfensteranordnung (3) nach einem der Ansprüche 1 bis 9, wobei eine Fläche einer orthografischen Projektion des lichtdurchlässigen Elements (20) in der ersten Region (B1) eine erste Fläche ist, eine Fläche einer orthografischen Projektion des Dekormoduls (30) in der zweiten Region (B2) eine zweite Fläche ist und eine Summe der ersten Fläche und der zweiten Fläche eine dritte Fläche ist, wobei die erste Fläche 25 %~75 % der dritten Fläche beträgt.

11. Fahrzeug (1), umfassend einen Fahrzeugrahmen (2) und eine Fahrzeugfensteranordnung (3) nach einem der Ansprüche 1 bis 10, wobei die Fahrzeugfensteranordnung (3) in dem Fahrzeugrahmen (2) montiert ist.

## Revendications

1. Ensemble fenêtre de véhicule (3), comprenant :
une bande de moulage (10), dans lequel la bande de moulage (10) entoure un espace pour définir une région de réception (A1), et la région de réception (A1) comprend une première région (B1) et une seconde région (B2) ;
un élément de transmission de lumière (20) disposé dans la première région (B1) ; et
un module décoratif (30) disposé dans la seconde région (B2),
dans lequel le module décoratif (30) comprend un panneau décoratif (310), un module photoélectrique (320) et une plaque de support (330), dans lequel le panneau décoratif (310) et la plaque de support (330) sont disposés l'un en face de l'autre pour définir de manière coopérative un premier espace de réception (Z1), le module photoélectrique (320) comprend un ensemble électroluminescent (321), l'ensemble électroluminescent (321) est reçu dans le premier espace de réception (Z1), l'ensemble électroluminescent (321) est configuré pour émettre de la lumière, et au moins une partie du panneau décoratif (310) est configurée pour permettre à la lumière de passer de manière traversante, et
dans lequel le module décoratif comprend en outre une quelconque parmi :
(a) une première plaque de couverture (340) reçue dans le premier espace de réception (Z1), dans lequel la première plaque de couverture (340) comprend une première plaque (341) et un premier cadre (342), la première plaque (341) fait face à la plaque de support (330), le premier cadre (342) est connecté à une périphérie de la première plaque (341) d'une manière courbée dans une direction dans laquelle le premier cadre (342) est orienté à l'opposé de la plaque de support (330), et l'ensemble électroluminescent (321) est disposé au niveau d'un côté de la première plaque (341) à l'opposé de la plaque de support (330) ; ou
(b) une seconde plaque de couverture (350) reçue dans le premier espace de réception (Z1), dans lequel la seconde plaque de couverture (350) comprend une seconde plaque (351) et un second cadre (352), la seconde plaque (351) fait face au panneau décoratif (310), le second cadre (352) est connecté à une périphérie de la seconde plaque (351) d'une manière courbée dans une direction dans laquelle le second cadre (352) est orienté à l'opposé du panneau décoratif (310), et l'ensemble électroluminescent (321) est disposé au niveau d'un côté de la seconde plaque (351) à l'opposé du panneau décoratif (310) ; ou
(c) une première plaque de couverture (340) et une seconde plaque de couverture(350), dans lequel la première plaque de couverture (340) et la seconde plaque de couverture (350) sont ajustées ensemble pour définir un second espace de réception (Z2), et l'ensemble électroluminescent (321) est disposé dans le second espace de réception (Z2).

2. Ensemble fenêtre de véhicule (3) selon la revendication 1, dans lequel l'ensemble électroluminescent (321) est mis en œuvre sous la forme d'au moins un ensemble électroluminescent (321), et chacun du au moins un ensemble électroluminescent (321) comprend une bande de guidage de lumière (3211), une source de lumière (3212) et une carte de circuit imprimé (3213), dans lequel la bande de guidage de lumière (3211) est configurée pour convertir un éclairage de source de lumière ponctuelle en un éclairage de source de lumière de surface, la carte de circuit imprimé (3213) est disposée sur un côté de la bande de guidage de lumière (3211), et la source de lumière (3212) est montée sur la carte de circuit imprimé (3213).

3. Ensemble fenêtre de véhicule (3) selon la revendication 2, dans lequel un certain de deux côtés opposés de la bande de guidage de lumière (3211) vient en butée contre le panneau décoratif (310), et l'autre des deux côtés opposés de la bande de guidage de lumière (3211) vient en butée contre la plaque de support (330).

4. Ensemble fenêtre de véhicule (3) selon la revendication 2, dans lequel la carte de circuit imprimé (3213) comprend une surface de montage (M1), la source de lumière (3212) est montée sur un certain côté de la carte de circuit imprimé (3213) où la surface de montage (M1) est située, et la surface de montage (M1) fait face à la bande de guidage de lumière (3211).

5. Ensemble fenêtre de véhicule (3) selon la revendication 2, dans lequel la carte de circuit imprimé (3213) comprend une surface de montage (M1), la source de lumière (3212) est montée sur un certain côté de la carte de circuit imprimé (3213) où la surface de montage (M1) est située, et la surface de montage (M1) fait face au panneau décoratif (310).

6. Ensemble fenêtre de véhicule (3) selon l'une quelconque des revendications 1 à 5, dans lequel le panneau décoratif (310) comprend une partie de protection contre la lumière (311) et une pluralité de parties de transmission de lumière (312), dans lequel la pluralité de parties de transmission de lumière (312) sont espacées les unes des autres, la partie de protection contre la lumière (311) entoure une périphérie de chacune des parties de transmission de lumière (312), et la partie de protection contre la lumière (311) présente un facteur de transmission de lumière inférieur à celui de chacune des parties de transmission de lumière (312).

7. Ensemble fenêtre de véhicule (3) selon la revendication 6, dans lequel le panneau décoratif (310) comprend des parties concaves (313) et des parties convexes (314) qui sont connectées séquentiellement de manière courbée dans une direction dans laquelle le module décoratif (30) fait face à l'élément de transmission de lumière (20), et chacune des parties de transmission de lumière (312) est située au niveau d'une certaine des parties concaves (313), ou située au niveau d'une certaine des parties convexes (314), ou située entre une certaine des parties concaves (313) et une certaine des parties convexes (314).

8. Ensemble fenêtre de véhicule (3) selon l'une quelconque des revendications 1 à 7, comprenant en outre une bande décorative (40), dans lequel la bande décorative (40) est disposée sur la bande de moulage (110) et entoure la région de réception (A1).

9. Ensemble fenêtre de véhicule (3) selon la revendication 8, dans lequel la bande de moulage (110) comprend une première bande de moulage (110) et une seconde bande de moulage (120), dans lequel la première bande de moulage (110) entoure un espace pour définir la région de réception (A1), la bande décorative (40) est disposée sur la première bande de moulage (110) et entoure la région de réception (A1), la seconde bande de moulage (120) est reliée à la première bande de moulage (110) pour séparer la région de réception (A1) en la première région (B1) et la seconde région (B2).

10. Ensemble fenêtre de véhicule (3) selon l'une quelconque des revendications 1 à 9, dans lequel une aire d'une projection orthographique de l'élément de transmission de lumière (20) dans la première région (B1) est une première aire, une aire d'une projection orthographique du module décoratif (30) dans la deuxième région (B2) est une deuxième aire, et une somme de la première aire et de la deuxième aire est une troisième aire, dans lequel la première aire représente de 25 % à 75 % de la troisième aire.

11. Véhicule (1), comprenant un châssis de véhicule (2) et l'ensemble fenêtre de véhicule (3) selon l'une quelconque des revendications 1 à 10, dans lequel l'ensemble fenêtre de véhicule (3) est monté dans le châssis de véhicule (2).
